# EUROPEAN PATENT APPLICATION

(11) **EP 4 574 416 A1**
(43) Date of publication of application: **25.06.2025**
(21) Application number: 24222192.7
(22) Date of filing: 20.12.2024
(51) Int. Cl.: B32B 3/04, B32B 3/06, B32B 3/18, B32B 5/18, B32B 5/24, B29C 43/00

(54) **PANEL AND METHOD OF MANUFACTURING THEREOF**

(30) Priority: 22.12.2023 IT 202300027978
(71) Applicant: Colantonio, Donato, 03032 Cassino (FR) (IT)
(72) Inventor: Colantonio, Donato, 03032 Cassino (FR) (IT)
(74) Representative: Conti, Marco

(57) **Abstract**

A panel (1) comprises: a skin (2) made of a fibrous fabric impregnated by a partially cured phenolic resin; a core assembly (5). The skin (2) is cured by compression molding at its polymerization temperature and at a constant pressure in order to completely wrap the core assembly (5) and make a single-piece panel (1).

## Description

The object of the present invention is a panel and a method for manufacturing it.

The object of the present invention is also a floor of a train, comprising a plurality of said composite panels, connected to one another.

The present invention relates to composite products, laminated products for example.

In particular, the present invention relates to a panel made of composite material with a core therein and preferably stiffening ribs, and a skin on a surface of the core.

It should be noted that "panel" means any object with a planar extension. The panel according to the present description has a broad application. For example, the panel may be used as a partition wall for application in a train or ship, or as a floor panel, for example, for trains, ships, or airplanes (or other mass transit systems). Moreover, the panel according to the present description may be used as a battery containment shell and relative cover; therefore, as a box containing either single battery packs or the whole frame on which different battery packs are installed. Conventionally, the panels, in particular flooring panels used for the mass transit systems, comprise a wood core, often balsa wood or plywood, inserted between two stainless steel or aluminum layers. Accordingly, the panels manufactured in this way are heavier than desirable. Moreover, past experience demonstrated that during the operation of the mass transit systems, the wood core is sometimes exposed to water which may cause the delamination of the stainless steel or aluminum layers and the decomposition of the wood core.

In this context, Patent US6824851 describes a multi-layer ("sandwich") panel for the flooring, with a reinforced core, which provides significant improvements with respect to panels having stainless steel or aluminum layers glued to the faces of a wood core, usually balsa wood or a plywood core.

Multi-layer (sandwich) panels are used in a wide variety of applications requiring good thermal insulation properties and/or structural properties. Multi-layer (sandwich) panels are composite structures made of a relatively thick core covered with two generally thin coatings or skins. The skins, usually dense and resistant, resist compression and tension, while the core, which usually is made of a relatively weak and low-density material, serves to separate the skins, stabilize them and resist the shear loads.

The panel described in Patent US6824851 includes a top skin, a bottom skin, a closing element defining the perimeter of the panel and a core interposed between the top and bottom skins and inside the closeout. The core is a precured reinforced core including a plurality of phenolic elongated elements and strips of expanded foam positioned in alternating manner.

The precured core is made by impregnating a fabric layer with phenolic resin between two expanded foam cores and stacking in similar alternating manner to create an assembled unit.

The assembled unit is subsequently cured at constant pressure and temperature. After the assembled unit is cooled, it is cut along a plane perpendicular to the plane of the layers to provide a panel with a precured reinforced core ready to be inserted as core in a multi-layer panel. Moreover, Patent Document US20210162703A1 provides a method of manufacturing a composite material panel in which the panel is made by gluing a skin onto the face of the core and pressing the skin onto the core in a mold.

Moreover, in different fields, in public transportation for example, such as train cars, buses and the like, government rules exist requiring fire-retardant panels which provide protection in case a fire were to occur. Patent US7897235B1 describes a fire-retardant panel comprising a primary reinforced core, surrounded by a plurality of closeouts and encapsulated between a first skin and a second skin, a second core made of balsa wood or phenolic foam or melamine foam and inserted between the second skin and an additional skin, and a layer of fire-retardant material attached to an outer face of the additional skin.

Further examples of the panels are described in Patent Documents US2011147358A1, US2015233126A1, US2012233861A, US2023264451A, and US217226674A.

The aforementioned inventions provide panels that are most resistant with respect to the preceding solutions, most lightweight and at a reduced cost, simultaneously providing sufficient fire-retardant ability to meet government standards. However, the need for further improvement is increasingly stronger in the field. Indeed, there is a need to manufacture a panel with greater resistance (to moisture), with a superior bond between the skin and the panel, which eliminates any delamination problem of the panel, and which requires reduced costs and assembly time.

It is the object of the present finding to provide a panel that overcomes the aforementioned drawbacks of the prior art.

In particular, it is the object of the present finding to provide a panel and a method of manufacturing it capable of strengthening the bond between the skin and the core of the panel and increasing the resistance of the panel in difficult environmental conditions, such as exposure to water or moisture, while keeping the weight, costs and assembly times as reduced as possible.

Said object is fully achieved by the panel and method of the present finding that are characterized by the contents of the following claims. According to an aspect of the present description, the present finding provides a panel. As explained above, the panel may be applied to different fields. In a preferred application, the panel is a panel for a floor of a train or a ship or other means of transport. In another preferred application, the panel may be used as a battery box, i.e., a box containing either the individual battery packs or the whole frame on which different battery packs are installed. The panel may be used also in buildings. The panel is made of a composite. Preferably, the panel is made of a phenolic composite.

The panel comprises a core assembly. The panel comprises a skin. The skin is made of a composite. Preferably, the skin is made of a phenolic composite. The core assembly is wrapped by the skin such as to be completely surrounded by the skin.

Therefore, according to an aspect of the present description, the panel is completely wrapped by a single skin, on all sides thereof.

Such a solution allows manufacturing a single-piece panel, having different dimensions, in which a single skin completely wraps all the sides of the core of the panel, giving the panel extreme flexional rigidity and resistance against difficult environmental conditions. In such a solution, the core assembly is completely wrapped by the skin without areas in which the core may be in contact with the outside.

In an example, the core assembly includes an inner core. In an example, the inner core is a single-piece core. In another example, the inner core includes a plurality of core segments. Therefore, in such an example, the plurality of core segments form the inner core.

In the example in which the core includes a plurality of core segments, the panel may include an internal skin. The internal skin at least partially wraps each of said core segments. Therefore, in such an example, the plurality of core segments is held together by the internal skin.

The internal skin is preferably similar to the skin wrapping the assembly, and at least partially wraps said core segments. Such a solution allows manufacturing a sturdier panel. Moreover, having the internal skin similar to the skin wrapping the core assembly makes the panel recyclable.

In an example, also the core may include the same resin as the skins (internal skin and the skin wrapping the core assembly).

In particular, when a sandwich panel is made where both the skins and the core are made of the same kind of material, specifically the same resin, the panel is recyclable at a low cost since it is possible to avoid the costs of separating and recycling varied materials.

In an example, the skin includes expandable graphite. Expandable graphite is a modified form of natural or synthetic graphite obtained by introducing chemical intercalations between the layers thereof. These intercalations are conventionally acids or oxidizing compounds, such as sulfuric or nitric acid, which react with the graphite forming intercalating compounds. When expandable graphite is subjected to intense heat (usually above 200-300°C), it undergoes quick volumetric expansion due to the thermal decomposition of the intercalations, which free gas such as water, sulfur dioxide or oxygen.

Expandable graphite may expand up to a hundred times with respect to the initial volume. Moreover, after the expansion, the graphite takes a porous and lightweight structure.

In this case, expandable graphite is used as flame retardant due to the formation of an insulating protective layer during the expansion.

In particular, the phenolic composite of the skin includes expandable graphite. Expandable graphite may have a size between 300 and 800 µm. The addition of expandable graphite to the phenolic resin of the skin gives the panel further fire resistance. The addition of graphites of the aforementioned size allows having an effective mixture of the graphite together with the resin. In an example, also the internal skin may include such an expandable graphite.

In an example, 10-20% of the weight of the skin and/or of the internal skin includes expandable graphite. In a preferred example, the inner core is made of a foam material. In such an example, at least a portion of the inner core is made of an open cell foam material.

In an example, the inner core may be made both of an open cell foam material and a closed cell foam material.

Preferably, the inner core is completely made of an open cell foam material.

The use of an open cell foam material facilitates de-aeration during the process of manufacturing the panel.

It should be noted that de-aeration is fundamental when the panel is being made, to remove the air and gas generated during the molding process. Such air may pass inside and through the open cell structure of the core so as to reduce the risk of the air and gas leading to defects and other deformities in the panel.

In another example, the inner core may be used in a closed cell foam material.

In the example in which the inner core is completely made of closed cell foam material, de-aeration holes or channels are provided through which air or gas generated during the panel manufacturing process, pass. In such an example, a vacuum system may be provided for sucking air from the panel during the panel manufacturing process.

In an example, the inner core may be made of a phenolic foam material (with open or closed cells).

The phenolic resin foam material satisfies the thermal insulation of the panel because it does not burn and resists under heat in the event of fire.

In a less preferred example, the inner core is made of wood and/or balsa wood. The use of a wood and/or balsa wood core allows minimizing the weight and cost of the panel. In another example, the core may be made of other materials, PET (polyethylene terephthalate) for example.

In an example, the inner core comprises a compressible material. In an example, the inner core is made of a compressible material so that a volume of the inner core is reduced in response to a pressure applied thereto. This allows covering the core assembly with the skin to make a single-piece panel, by means of compression molding, for example.

In an example, the skin is configured to be polymerized (cured) by compression molding at its polymerization temperature. In such a solution, the skin is pressed into capillaries of the inner core and provides a superior bond, which eliminates any delamination problem.

In an example, the phenolic composite forming the skin includes a fibrous fabric impregnated by the phenolic resin. In particular, the phenolic composite forming the skin may include a fibrous fabric impregnated by a partially cured phenolic resin. The temperature of the compression molding is equal to the polymerization temperature of the phenolic resin. Phenolic resin conforms with fire safety standards in the railway field. The phenolic resin-impregnated composite, subjected to flame, is selfextinguishing, it does not emit toxic gases during combustion and does not emit black smoke which may block escape paths in a railway car.

The fibers are preferably carbon or glass or basalt fibers.

In a preferred example, the fabric is a fiberglass fabric.

Preferably, its fibers are recycled fibers.

In an example, the core assembly includes a plurality of closeouts. The closeouts surround the inner core about a perimeter of the panel so as to form the core assembly. The plurality of closeouts is configured to prevent moisture from entering the inner core and to provide the panel with greater resistance and stability.

Each closeout of the plurality of closeouts may be made of a phenolic material. Moreover, each closeout of the plurality of closeouts is machinable to include at least one mating surface for connecting the adjacent panels. Such a solution allows reducing the assembly time. According to an aspect of the present description, the present finding also provides a floor of a train or ship. The floor comprises a plurality of panels according to one or more aspects of the present description, connected to one another. Each panel includes at least one mating surface. In an example, the mating surface is an overlapping joint. In an example, each panel includes at least one hole on the closeout for mechanically fastening adjacent panels up to forming the floor of the train. Each panel may be easily perforated and threaded to be mechanically fastened to a frame of the train.

According to an aspect of the present description, the present finding also provides a battery containment shell and relative cover; that is a box containing either the individual battery packs or the whole frame on which different battery packs are installed. The battery containment shell and relative cover comprise a plurality of panels according to one or more aspects of the present description, connected to one another.

According to an aspect of the present description, the present finding also provides a method of manufacturing a panel. The panel may be used as a partition wall for positioning in a train or ship, or as a floor panel, for train, ship, or airplane (or other mass transit systems) for example, or as battery containment shell and relative cover; therefore, as a box containing either single battery packs or the whole frame on which different battery packs are installed. The method comprises a step of providing a core assembly. The method comprises a step of providing a skin. The skin is made of a phenolic composite.

The method comprises a step of wrapping the core assembly with the skin such that the core assembly is completely surrounded by the skin.

In an example, the skin is made through a step of impregnating a fibrous fabric with a partially cured phenolic resin. Moreover, the skin is made through a step of curing the impregnated fabric by means of compression molding.

The method may comprise a step of providing a mold. The mold includes a female mold part and a male mold part cooperating to compress an object inserted therebetween.

The method may comprise a step of heating the female mold part and the male mold part.

The method may comprise a step of positioning a first portion of the skin in a cavity of the female mold part so that a second portion of the skin overhangs the cavity of the female mold part.

The method may comprise a step of inserting the core assembly in the female mold part so that a bottom face of the core assembly contacts the skin.

The method may comprise a step of wrapping a top face of the assembly through the second portion of the skin.

The method may comprise a step of closing the mold by inserting the male mold part into the cavity of the female mold part.

The method comprises a step of compressing the core assembly wrapped with the skin, between the heated female mold part and heated male mold part to obtain the polymerization of the resin.

Preferably, the pressure and temperature are kept constant in the compression molding step. The molding temperature is equal to the polymerization temperature of the resin.

In an example, the core assembly comprises an inner core. The inner core comprises a compressible material. In an example, the inner core is made of a compressible material so that the volume of the inner core is reduced in response to a pressure applied thereto during the compression. In an example, the provision of the core assembly includes providing a plurality of core segments and an internal skin. In such a solution, the method comprises also a step of at least partially wrapping each of said core segments by means of the internal skin. Alternatively, the step of providing the core comprises the provision of a monolithic core.

As explained above, in the present solution, a single skin covers the entire panel to give it structural rigidity. This is made possible by the molding process according to one or more aspects of the present description, which liquefies the resin and allows an adhesion between the only skin and the core which may be a phenolic resin core, preferably a phenolic resin core with open cells that accept the resin in liquid phase during the molding process.

This and other features will be more apparent from the following description of a preferred embodiment, shown merely by way of nonlimiting example in the accompanying drawings, in which:

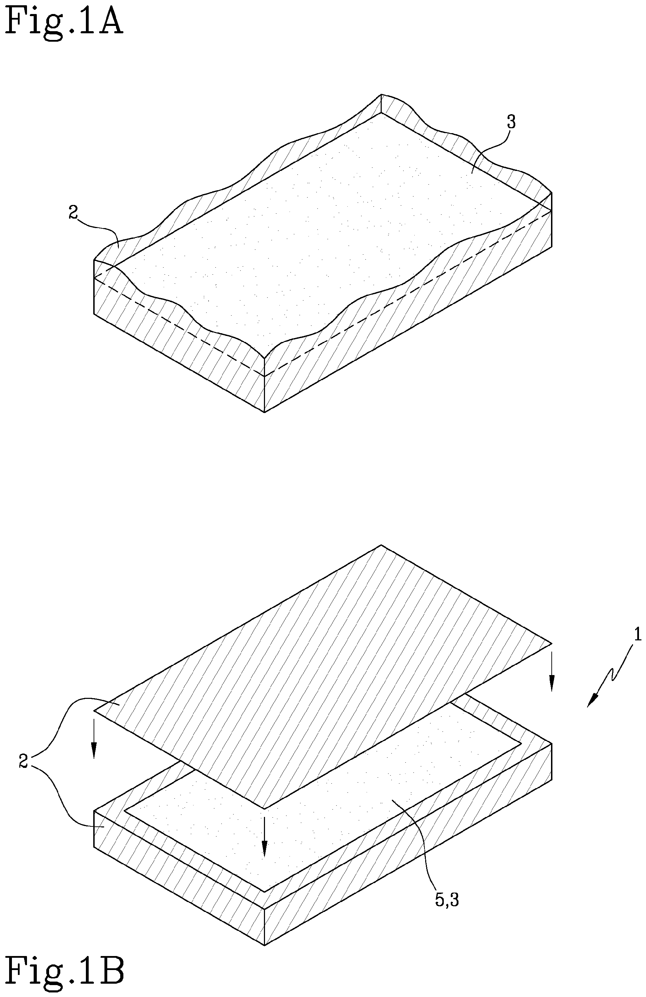

- Figure 1A shows a core assembly partially wrapped by a skin to form a panel according to one or more aspects of the present description;
- Figure 1B shows a wrapping of the top face of the core partially wrapped by the skin with a layer of the skin;

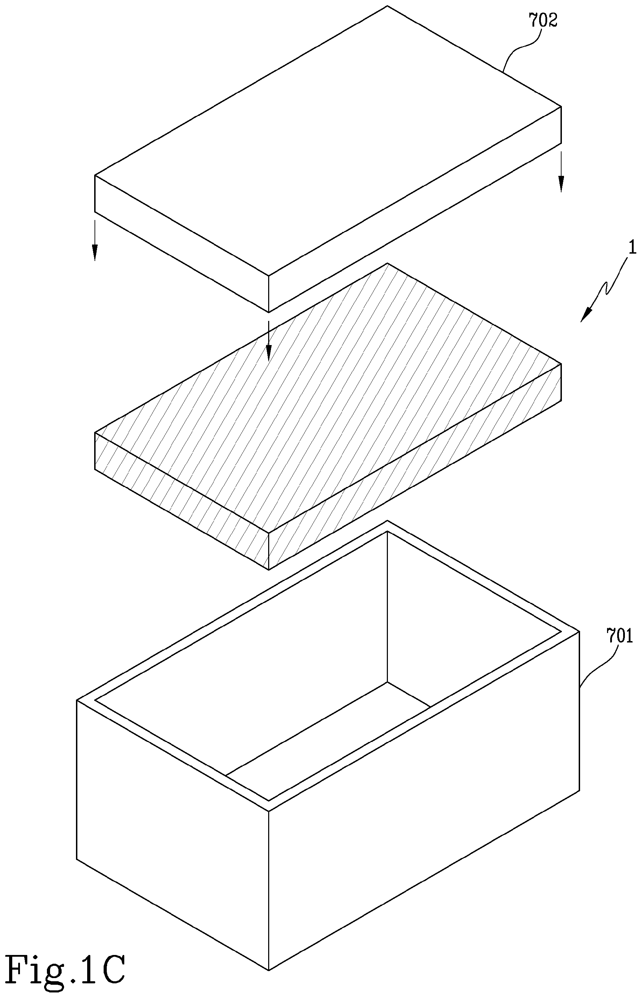

- Figure 1C shows the core assembly completely wrapped by the skin and the compression mold;

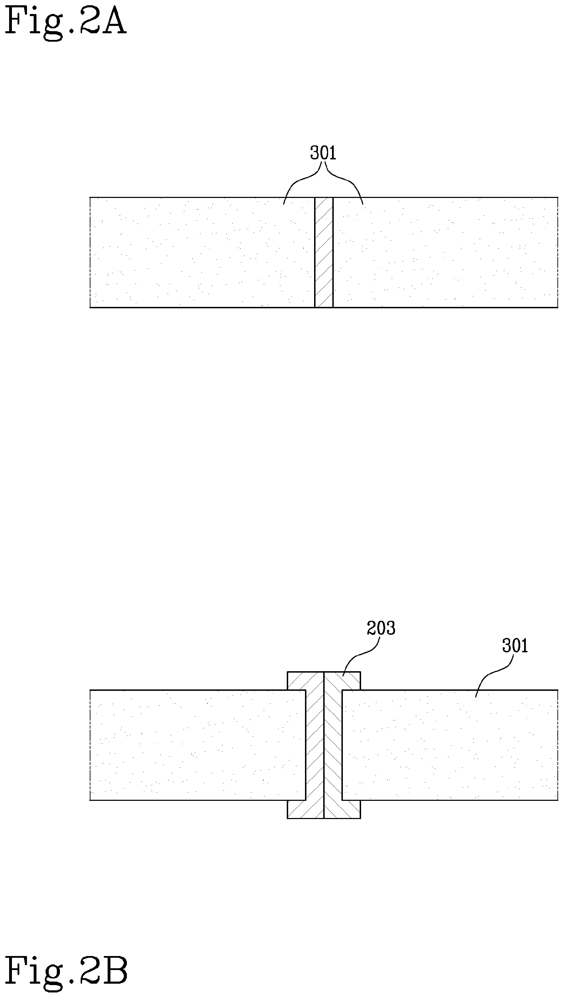

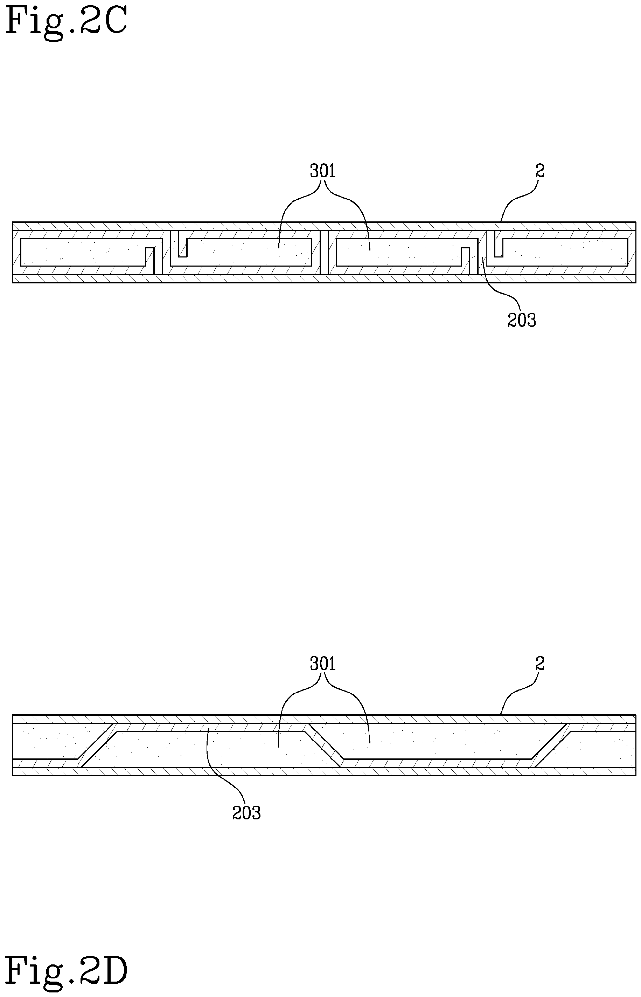

- Figures 2A-2D show different embodiments of the core segments and the internal skin;
- Figures 3A-3E show the steps of manufacturing the panel inside the compression mold;
- Figure 4 shows the inner core and the closeouts;

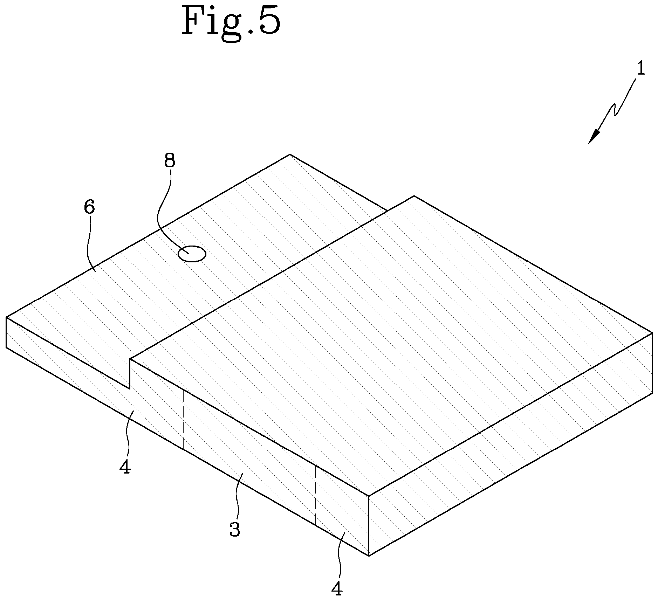

- Figure 5 shows a possible embodiment of the panel;

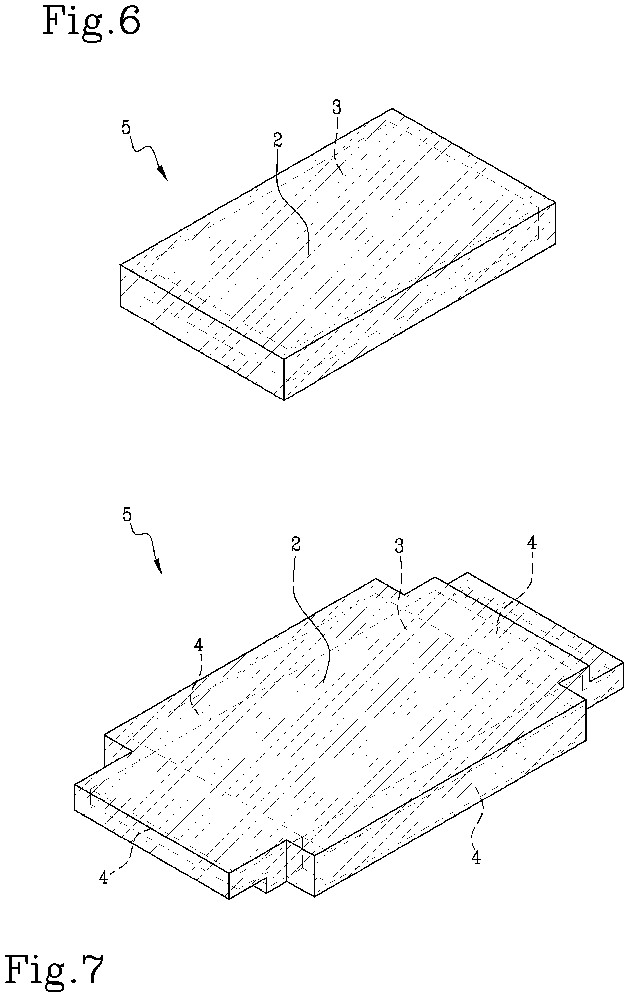

- Figures 6 and 7 show the panel, in two different embodiments, completely wrapped by the skin.

With reference to the accompanying drawings, a panel is indicated by reference numeral 1. Panel 1 is preferably a panel for a floor of a train or ship. In another preferred application, panel 1 may be a panel for a battery containment shell, as explained above. Panel 1 comprises a skin 2. Skin 2 is made of a phenolic composite. The phenolic composite comprises a fibrous fabric impregnated with a phenolic resin. The fabric may be a fiberglass, carbon fiber or basalt fabric. The skin is made of a short fiber or long fiber phenolic composite. The skin may be made using fabrics impregnated with resins such as polyesters, vinyl esters, epoxy and phenolic resins according to requirements, but with formulations suitable for press molding. Preferably, the skin includes short fibers impregnated with the phenolic resin.

In an example, the skin may be made by mixing resin powder inside the resin. Resin powder may be recycled from composite waste. Resin powder may have a size between 300 and 900 µm. Inside the resin, the skin may include parts of glass and/or carbon short fiber. The parts of glass and/or carbon fiber may be recycled from composite waste, for example, wind turbine blades, boat waste and composite structural and covering panels. In an example, the core may include resin powder. Such a resin powder may be recycled from composite waste. Such a resin powder may have a size between 300 and 900 µm. The core may comprise parts of glass and/or carbon short fiber. Such parts of glass and/or carbon short fiber may be recycled from composite waste, for example, wind turbine blades, boat waste and composite structural and covering panels.

The skin may be formed by means of compression molding a sheet molding compound (SMC). SMC comprises a (thermosetting) resin, a phenolic resin for example, together with reinforcing fibers (preferably short fibers).

Preferably, the skin includes recycled material inside the resin.

Inside the resin, the skin may include material mixed with resin powder and fiber, obtained by grinding recycled products.

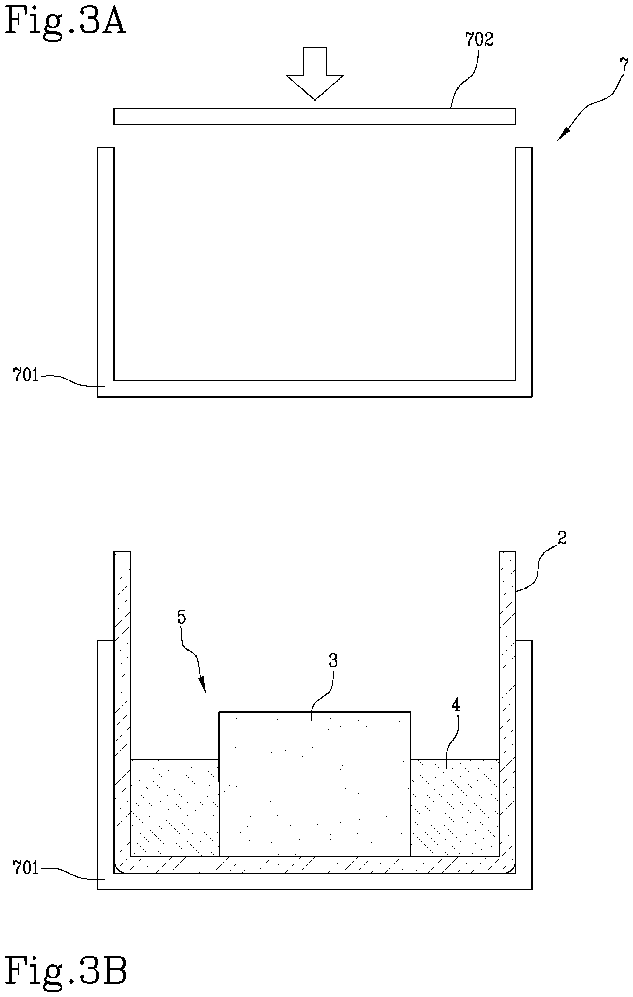

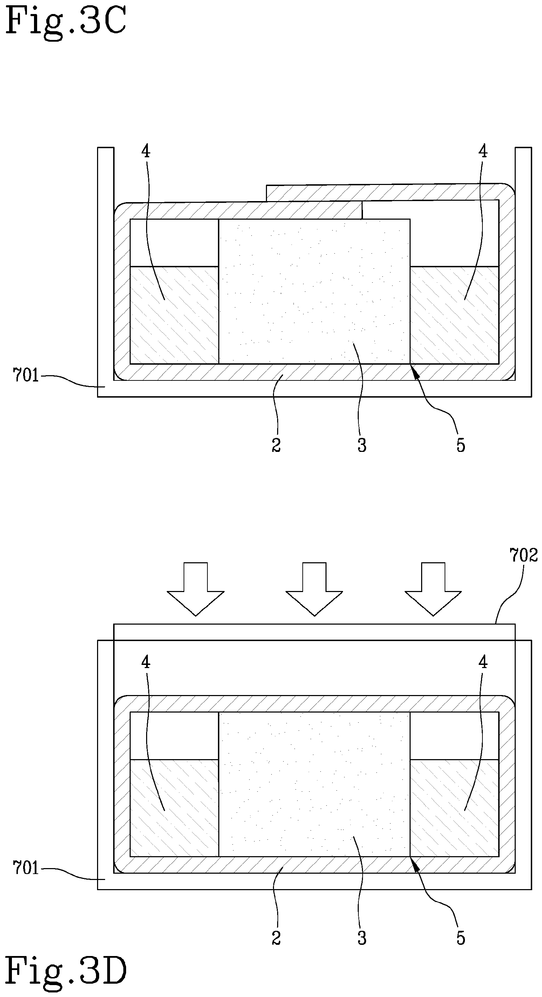

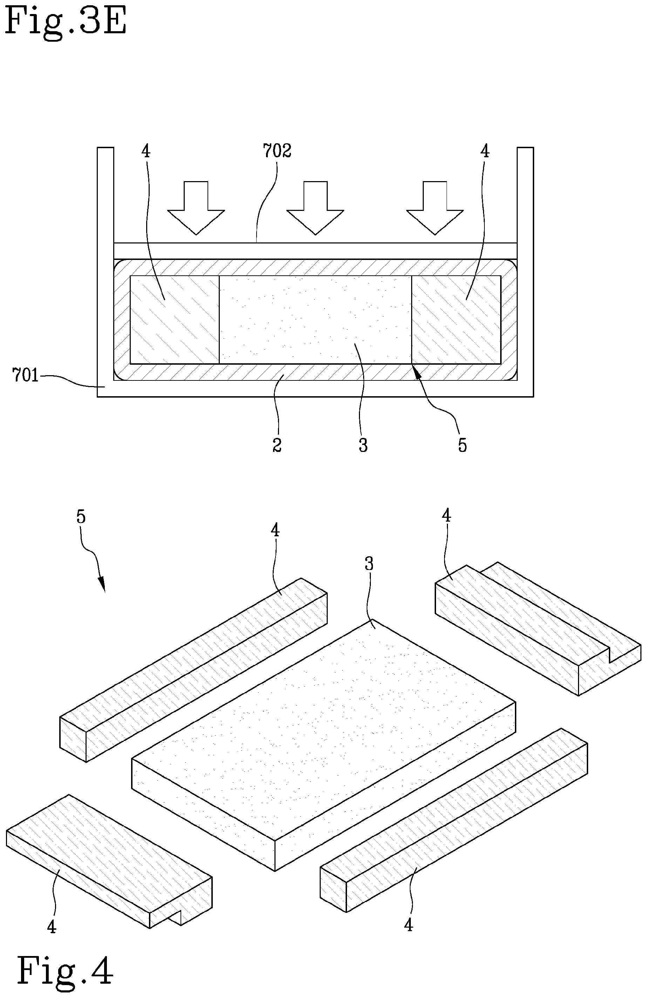

In particular, composite waste products, end of use products or nonconforming (faulty) products are used to recycle the fibers and resin. The waste products are ground and pulverized. Then the resin is separated from the fibers. The granularity of the powders preferably does not exceed 300 µm. The recycled resin powder is added to the virgin resin to thicken the virgin resin. The recycled fiber is added to the resin to increase the mechanical resistance. Therefore, the virgin resin may be mixed with resin powder and fiber obtained by means of grinding waste products; or the resin is mixed with resin powder and impregnated with the recycled fiber. The fibers are recycled to be as long as possible. Preferably, the percentage in weight of the recycled material is between 15 to 30%. Panel 1 comprises a core assembly 5. In a preferred embodiment, the core assembly 5 comprises a plurality of core segments 301. The panel may also comprise an internal skin 203. Said internal skin 203 is preferably similar to skin 2 which completely wraps assembly 5. The core segments 301 are held together by means of the internal skin 203. In an embodiment, at least one face between a top face and a bottom face of each core segment is directly in contact with skin 2, and at least one side face of each core segment is in direct contact with the internal skin 203. In such a solution, the internal skin 203 at least partially surrounds the core segments 301 so as to separate the adjacent core segments 301 and hold them stably (Figure 3C). In another embodiment, the internal skin 203 completely wraps pairs of core segments 301 and alternately delimits opposite side faces of the adjacent core segments 301 of a plurality of side-by-side core segments 301 (Figure 3D). In another embodiment, the internal skin may be arranged between every two adjacent core segments in a "C" shape (Figure 3B). In another embodiment, the internal skin may be arranged between every two adjacent core segments in the shape of a vertical strip (Figure 3A). The height of the strips of internal skin in such an example may be equal to or greater than the thickness of the inner core. Preferably, the internal skin 203 has the same resin as skin 2 wrapping the core assembly. This allows standardizing the curing times of the end product.

Alternatively, the inner core 3 is a monolithic core. The inner core 3 is made of a compressible material. The inner core is made of a phenolic foam material. Preferably, the inner core has an open cell structure. Alternatively, the inner core is made of a closed cell foam material. Preferably, the resin used to make the inner core 3 is similar to the one used to make skin 2 (same resin formulation).

The inner core 3 may include a thermoplastic or thermosetting material. The inner core may have a completely open cell structure or the closed cell structure, with portions of open cell structure positioned inside a closed cell foam matrix.

Panel 1 may also comprise a plurality of closeouts 4. The plurality of closeouts 4 surrounds the inner core 3 (both when it is monolithic and when it consists of core segments) about a perimeter of panel 1. In such an example, the plurality of closeouts 4 and the inner core 3 form the core assembly 5. Therefore, the core assembly may consist of the inner core (monolithic or consisting of core segments) or of the inner core and the plurality of closeouts 4. Skin 2 wraps the core assembly 5 so that skin 2 contacts a bottom face and a top face of the core assembly 5. Skin 2 is configured to be cured by compression molding at its polymerization temperature and at a constant pressure. The plurality of closeouts 4 may be made of a phenolic material. In an example, the plurality of closeouts 4 also includes a mating surface 6. The mating surface 6 of a panel 1 is configured to contact another mating surface of an adjacent panel and allows a simple assembly of panels in order to form a floor of the train. In an example, the mating surface 6 is an overlapping joint. Preferably, the mating surface 6 includes a hole 8. In an example, each panel 1 defines a plane, and hole 8 is perpendicular to the plane of panel 1. Hole 8 allows mechanically fastening adjacent panels.

According to an aspect of the present description, the present finding also provides a floor of a train. The floor is assembled on site from a plurality of prefabricated panels. Said panels are interconnected to form the floor. Each panel 1 of the plurality of panels comprises a core 3. Each panel 1 also comprises a plurality of closeouts 4. The plurality of closeouts 4 surrounds core 3 about a perimeter of panel 1 in order to form an assembly 5. Each panel 1 also comprises a skin 2 made of a fibrous fabric impregnated with a phenolic resin. Skin 2 wraps assembly 5 so that assembly 5 is completely surrounded by skin 2.

It is provided for each panel 1 to be machinable to include at least one mating surface 6. In an example, the mating surface 6 is an overlapping joint. The panels may be easily connected to one another by overlapping joints cut in the closeouts 4. In an example, each panel 1 includes at least one hole 8 on closeout 4. Such a solution allows mechanically fastening adjacent panels in order to form the floor of the train. Each panel 1 may be easily perforated and threaded to be mechanically fastened to a frame of the train.

According to an aspect of the present description, the present finding also provides
a method for manufacturing a panel 1, for example, a panel for the floor of a train. The method comprises a step of providing a core assembly 5. The core assembly 5 includes an inner core 3. The inner core may be a single piece or may consist of different core segments 301. The method may comprise a step of providing a plurality of closeouts 4. The method may comprise a step of providing an internal skin 203. The method comprises also a step of at least partially wrapping each of said core segments 301 by means of the internal skin 203 in order to form the inner core 3 of panel 1. Alternatively, the method comprises a step of providing a monolithic inner core 3. The method comprises also a step of surrounding a perimeter of the inner core 3 with the plurality of closeouts 4 and forming the core assembly 5. The method comprises a step of providing a skin 2. Skin 2 is partially cured. Skin 2 may be made by impregnating a fibrous fabric with a phenolic resin. The method comprises a step of providing a mold 7. In an example, the mold includes a female mold part 701 and a male mold part 702. The female mold part 701 includes a cavity and is configured to contain the molding material. The male mold part 702 cooperates with the female mold part 701 to compress an object inserted therebetween. The method comprises a step of heating the female mold part 701 and the male mold part 702. The temperature inside mold 7 is equal to the polymerization temperature of the phenolic resin forming skin 2. The method comprises a step of positioning a first portion 201 of the skin in the cavity of the female mold part 701. The positioning of skin 2 is performed so that a second portion of skin 202 overhangs the cavity of the female mold part 701. The method comprises a step of inserting the core assembly 5, formed by the inner core 3 and the plurality of closeouts 4 or formed only by the inner core 3 in the female mold part 701, so that a bottom face of the core assembly touches skin 2. Moreover, in the event of having a core comprising a plurality of core segments 301, the method comprises a step of inserting the core segments 301 into the female mold part 701 and a step of at least partly surrounding the segments with the internal skin 203. The core segments and the internal skin are made in the same production step as the panel, significantly reducing the production times. Therefore, according to an aspect of the present description, it is provided that the reinforcements of the core (segments wrapped by the internal skin) are cured directly during the compression and heating step of the panel in mold 7. It should be noted that in an example, in contrast to the methods of the prior art, skin 2 is not cured and is cured together with the internal skin 203 by the application of pressure and temperature.

The method comprises a step of wrapping a top face of the core assembly by means of the second portion of skin 202 so that the top face of the assembly touches skin 2. The method comprises a step of inserting the male mold part 702 into the cavity of the female mold part 701 and closing mold 7. After skin 2 and assembly 5 are inserted into the female mold part 701, the male mold part 702 urges downwards on the female mold part 701 to apply a desired pressure.

The inner core 3 may be made of a material with open or closed cells.

After the mold is closed, a de-aeration (de-gassing) operation is performed to promote the evacuation of the gas or air from the core of the panel. Such a de-aeration occurs by applying pressure on the core assembly while the core assembly is inside the mold. Preferably, the application of pressure occurs in different cycles, therefore, in practice the pressure is released on the core assembly 5, then reapplied. The de-aeration is fundamental because when the foam material of the core is pressed during the compression molding,
the air may remain inside the core when the structure is a closed cell structure; therefore, the air cannot escape and after the compression, the air remains inside the core and creates an internal pressure.

It should be noted that the de-aeration is performed in one or more cycles also when the open cell structure is used.

When a core 3 with a closed cell structure is used, de-aeration holes are provided inside the mold.

Moreover, in such an example, a sealing device may be provided. The sealing device keeps the cavity of the molding female mold part (molding cavity) airtight, and preferably the surrounding volume of air. In particular, the sealing device is configured to keep the molding cavity and the surrounding volume of air airtight when the molding cavity is closed by the male mold part and the molding cavity is in air communication with a surrounding volume of air and when the molding cavity is completely closed. Moreover, a vacuum system may be provided. The vacuum system is configured to suck air from the molding cavity. In an example, the vacuum system is configured to suck air from the molding cavity when the molding cavity is closed by the male mold part and the molding cavity is in air communication with the surrounding volume of air and/or when the molding cavity is completely closed. Moreover, the vacuum system is configured to maintain a negative pressure inside the molding cavity when the molding cavity is completely closed. Therefore, according to an aspect of the present description, it is provided that the vacuum system removes the air inside the molding cavity, where the core assembly 5 is inserted, when the cavity is closed on the male part of the mold prior to the compression and/or during the compression molding.

In particular, during the suction, the air may be sucked both from above (upwards) and below (downwards) the cavity. Suction channels may be provided in the female part and/or in the male part to suck air from the molding cavity so that air is sucked both from above and below the molding cavity.

During the de-aeration step, it may be provided to apply pressure on the core assembly 5 in sequence (in particular, when an inner core with a closed cell structure is provided).

Skin 2 and the core assembly 5 are cured (co-cured) at predetermined temperature and pressure to cure the phenolic resin and press it into the capillaries of the core assembly 5 so as to make a bond between skin 2 and the core assembly 5 and form a single-piece panel 1. The temperature and pressure are kept constant during the compression molding. Panel 1 is then cooled to a temperature equal to room temperature or to a lower temperature for a given time period. In an example, the inner core 3 is made of a compressible material. During the compression molding, core 3 is compressed between the female mold part 701 and the male mold part 702, and an initial height of the inner core 3 and a final height of the inner core. The initial height is greater than the final height. In the example providing the closeouts 4, the initial height of the inner core 3 is greater than the height of the plurality of closeouts 4, and the final height is equal to the height of the plurality of closeouts 4.

Therefore, panel 1 is made by compressing the skin and the core assembly 5 (which may comprise a monolithic core or the core segments 301) inside a closed mold. The single skin wrapped about the core assembly allows wrapping all the surfaces of the core (and the closeouts), giving the panel a significant rigidity as compared to conventional panels. A step is also provided of making at least one mating surface 6 on the plurality of closeouts 4 for connecting the panels to one another. In an example, an overlapping joint is cut in the closeout. In an example, a step is also provided for perforating skin 2 to make at least one hole 8 on panel 1 for mechanically fastening adjacent panels to one another and to a frame of the train, in order to form the floor of the train.

## Claims

1. A panel (1), comprising:
- a skin (2) made of a phenolic composite;
- a core assembly (5);
**characterized in that** the core assembly (5) is wrapped in the skin (2) such that the core assembly is completely surrounded by the skin (2).

2. A panel (1) according to claim 1, further comprising an internal skin (203), and wherein the core assembly comprises an inner core (3), made by a plurality of core segments (301) held together by the internal skin.

3. A panel (1) according to claim 1, wherein the core assembly (5) includes an inner core (3), the inner core being a monolithic core.

4. A panel (1) according to claim 2 or 3, wherein the inner core (3) is made of a foam material, and wherein at least a portion of the inner core is made of an open cell foam material.

5. A panel (1) according to any of claims from 2 to 4, wherein the inner core (3) is made of a compressible material so that a volume of the core (3) is reduced in response to a pressure applied thereto.

6. A panel (1) according to claim 5, wherein the skin (2) is configured to be cured by compression molding at its polymerization temperature.

7. A panel (1) according to any of the previous claims, wherein the phenolic composite forming the skin (2) includes a fibrous fabric impregnated by a phenolic resin, wherein the fibers are carbon or glass or basalt fibers, wherein the fibers are recycled fibers.

8. A panel (1) according to claim 2 or 3, wherein the core assembly (5) includes a plurality of closeouts (4) surrounding the inner core around a perimeter of the panel (1), thereby forming the core assembly,
wherein each closeout of the plurality of closeouts (4) is made of a phenolic material.

9. A panel (1) according to any one of the preceding claims, wherein the skin includes expandable graphite.

10. A panel (1) according to claim 9, wherein the expandable graphite has a size between 300 µm and 800 µm.

11. A panel (1) according to claim 8, wherein each closeout of the plurality of closeouts (4) is machinable to include at least one mating surface (6).

12. A method of manufacturing a panel (1), the method comprising the following steps:
- providing a core assembly (5);
- providing a phenolic skin (2) made of a phenolic composite;
- wrapping the core assembly (5) with the skin (2) such that the core assembly (5) is completely surrounded by the skin (2).

13. A method according to claim 12, wherein the skin (2) is obtained through the following steps:
- impregnating a fibrous fabric with a partially cured phenolic resin;
- curing the impregnated fabric with the resin by compression molding; the method further comprising the following steps:
- providing a mold (7), including a female mold part (701) and a male mold part (702) cooperating to compress an object inserted therebetween;
- heating the female mold part (701) and the male mold part (702);
- positioning a first portion (201) of the skin in a cavity of the female mold part (701) so that a second portion (202) of the skin overhangs the cavity of the female mold part (701);
- positioning the core assembly (5) in the female mold part (701) so that a bottom face of the core assembly contacts the skin (2);
- wrapping a top face of the assembly through the second portion (202) of the skin;
- closing the mold by inserting the male mold part (702) into the cavity of the female mold part (701);
- compressing the core assembly (5) wrapped with the skin (2), between the heated female mold part (701) and heated male mold part (702) to obtain the polymerization of the resin.

14. A method according to claim 13, comprising a step of sucking air from the molding cavity when the molding cavity is closed by the male mold part and the molding cavity is in air communication with the surrounding volume of air and/or when the molding cavity is completely closed.

15. A method according to claim 13 or 14, wherein the core assembly comprises an inner core (3) made of a compressible material, so that the volume of the inner core is reduced in response to a pressure applied thereto during compression.
